# EUROPEAN PATENT SPECIFICATION

(11) **EP 2 164 745 B1**
(45) Date of publication and mention of the grant of the patent: **07.08.2013**
(21) Application number: 08759810.8
(22) Date of filing: 20.05.2008
(51) Int. Cl.: B62B 7/08, B62B 9/20

(54) **INFANT PUSHCHAIR**
KINDERWAGEN
POUSSETTE POUR BÉBÉ

(30) Priority: 21.05.2007 ES 200701374
(43) Date of publication of application: 24.03.2010
(73) Proprietor: PLAY, S.A., 08184 Palau de Plegamans (ES)
(72) Inventor: JANE STOPP, Joaquin, E-08190 SANT CUGAT DEL VALLES (ES)
(74) Representative: Carpintero Lopez, Francisco
(86) International application number: PCT/EP2008/056201
(87) International publication number: WO 2008/142082

(56) References cited:
- DE-U1- 20 011 187
- DE-U1- 20 013 886
- US-A- 4 216 974
- US-A- 5 863 061
- US-A- 5 938 229

## Description

The present invention refers to a foldable infant pushchair, in which the handlebar can be placed in different positions.

### BACKGROUND OF THE INVENTION

Nowadays infant pushchairs comprising a handlebar that can be placed in different positions are known. This variation in the position of the handlebar is carried out to adapt it to the height of the adult who pushes the pushchair.

In these pushchairs, its folding is carried out in a completely independent way to the variation of the position of the handlebar. The folding of the pushchair is usually carried out by an actuator provided between the rear legs.

On the other hand, there are infant pushchairs whose folding is carried out from the upper part of the handlebar, such as e.g. that described in Spanish Utility model U9902254, in the name of the same applicant as the present application. However, the handlebar of this pushchair cannot be placed in different positions to be adapted to the height of the adult user, and it is also necessary to push two actuators at the same time to fold the pushchair.

It is also known the device of folding infant pushchairs disclosed in Spanish patent ES-A-2 070 071, whose device comprises a rotatable disc placed in the handlebar. As in the previous case, said handlebar cannot be placed in different positions to be adapted to the height of the adult user, and it is also necessary to push a push-button to unlock the folding of the pushchair.

DE 200 11 187 U1 discloses a foldable infant pushchair according to the preamble of claim 1, which includes a handle unit having a pair of struts, a pair of curved handgrips pivoted to the struts and connected pivotally together, and a first locking unit connected to the handgrips for locking the handgrips against pivotal movement. The infant push chair further includes a pair of foldable wheeled frames movable along the struts, a pair of second locking units for interlocking with the wheeled frames so as to lock the wheeled frames against movement, and a pair of transmission links connected to the handgrips and the second locking units for unlocking the second locking units.

### DESCRIPTION OF THE INVENTION

With the infant pushchair of the invention said drawbacks can be solved, presenting other advantages that will be described.

The infant pushchair of the present invention is defined in claim 1, and comprises a frame defining a handlebar, a backrest, frontal legs provided with wheels and rear legs also provided with wheels, said handlebar being hinged with respect to said backrest, and the pushchair comprising folding means, and it is characterised in that said folding means are driven with said handlebar, when it is placed in a folding position.

Thanks to this feature, the folding of the pushchair is more comfortable than in the conventional pushchairs, because the usual folding of the handlebar to adapt it to the height of the adult user is used also to fold the pushchair. Furthermore, it permits to integrate the driving of the folding of the pushchair from the handlebar with the possibility of modifying its position.

According to a preferred embodiment, said folding means of the backrest comprises a driving cable linked with said handlebar and with a pin provided at the lower part of said backrest, so that in the use position of the handlebar said driving cable is relaxed and in the folding position of said handlebar the cable is tight and leads said pin to be removed from a housing provided in a central connection joint between said backrest and one of said frontal legs.

Advantageously, said central joint comprises an additional housing for said pin, inside which is housed when the backrest is in its folded position.

Preferably, said driving cable comprises two pins, one in each one of its ends, which are housed inside two central joints placed at both sides of the backrest.

Advantageously, said pin comprises an associated elastic element that pushes it to prevent its removal from the housing where it is housed.

Said rear legs are movable between a use position and a folded position, in which the rear wheels are aligned with the frontal wheels. This position is especially advantageous in determined circumstances, e.g. for stairs.

Preferably, the folding movement of said rear legs is driven by a movable plate provided in a rotatable seat of the pushchair.

### BRIEF DESCRIPTION OF THE DRAWINGS

For a better understanding of that disclosed previously some drawings are attached in which, diagrammatically and only as a non-limitative example a practical case of embodiment is shown.
Fig. 1 is a perspective view of the infant pushchair of the present invention in its use position;
Fig. 2 is a perspective view of the infant pushchair of the present invention in a partially folded position;
Fig. 3 is a perspective view of the infant pushchair of the present invention in its folded position;
Fig. 4 is a perspective view of the infant pushchair of the present invention with its rear legs in its folded position;
Fig. 5 shows the driving mechanism for folding the handlebar of the infant pushchair of the present invention;
Fig. 6 shows an intermediate connection joint between the handlebar and the backrest, in an intermediate position of the handlebar;
Fig. 7 is a perspective view of the lower connection joint of the infant pushchair of the present invention in its use position;
Fig. 8 is a perspective view of the lower connection joint of the infant pushchair of the present invention in its folded position; and
Fig. 9 is a diagrammatical perspective view of the rotatable seat of the pushchair and the driving means for moving the rear legs to their folding position.

### DESCRIPTION OF A PREFERRED EMBODIMENT

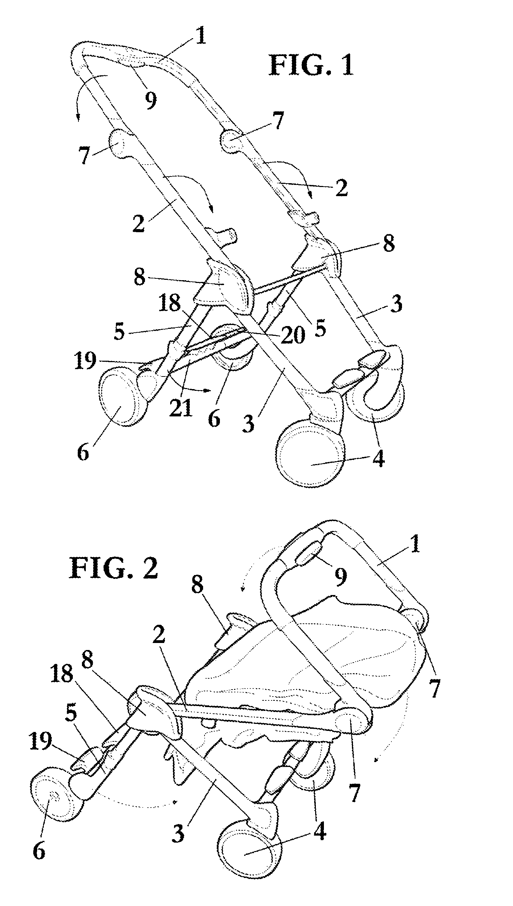

As it can be seen in Fig. 1, the infant pushchair of the present invention comprises a frame defining a handlebar 1, a backrest formed by two substantially vertical bars 2, a pair of frontal legs 3 with their corresponding frontal wheels 4 and a pair of rear legs 5 with their corresponding rear wheels 6.

Said handlebar 1 has an inverted U-shape and is hinged to said backrest 2 by two upper joint connections 7, as will be described hereinafter. The handlebar 1 can be placed in different positions depending on the wishes of the adult user, to be comfortable pushing the pushchair according to his/her height.

On the other hand, the backrest 2 and the frontal 3 and rear 5 legs are hinged in two central joint connections 8, as will be described hereinafter.

Said handlebar 1 can be placed in several use positions, such a some of the conventional pushchairs, but it can also be placed in a folded position, shown in Fig. 2, in which the backrest 2 of the pushchair is also folded automatically over the frontal legs 3.

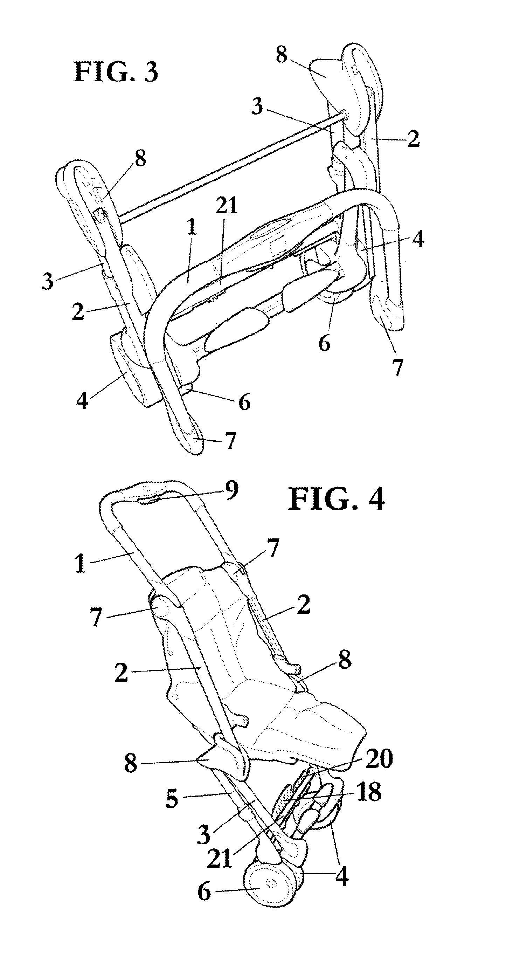

In Fig. 3 the pushchair of the present invention is shown completely folded, occupying a very reduced space.

In Fig. 4 it can be seen that the rear legs 5 can be folded with the frontal wheels 3, so that the frontal 4 and rear 6 wheels are aligned, i.e. the rotation axis of the four wheels are substantially aligned. This folding of the rear legs 5 is carried out pressing a central push-button 18 with a foot.

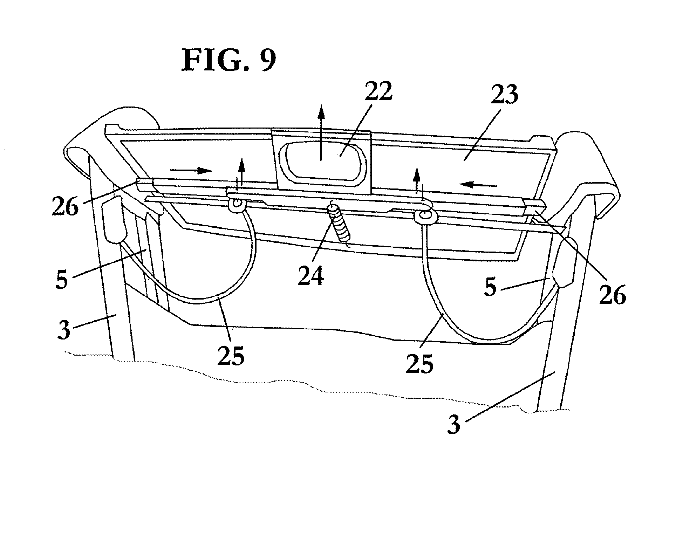

In an alternative embodiment, shown in Fig. 9, this folding of the rear legs 5 can be carried out by a plate 22 provided at the lower part of a rotatable seat 23 of the pushchair.

In this case, when the plate 22 is moved to its folding position against the force of a spring 24, a pair of cables 25 are tightened to permit the rear legs 5 to be folded.

This plate 22 is also linked with a pair of protrusions 26 which are used to lock the seat 23 in a substantially horizontal position. These protrusions 26, in the horizontal position, are housed inside complementary cavities (not shown) provided in the frame of the pushchair.

When the plate 22 is moved to the folding position, these protrusions are removed from the cavities and the seat 23 can be rotated to a substantially vertical position and, at the same time, the cables 25 are tightened and the rear legs 5 are folded.

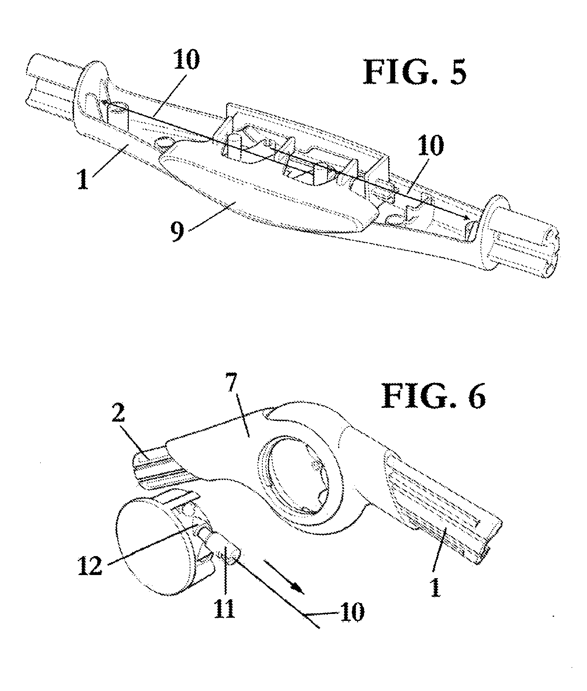

In Figs. 5 and 6 the mechanism which permits the folding of the handlebar 1 is shown, that is formed by a push-button 9 that drives two cables 10.

These cables 10 comprise at the other end a pin 11 which is housed inside one of the complementary housings 12 provided at the upper connection joint 7, as it can be seen in Fig. 6. It must be pointed out that in Fig. 6 is shown an upper connection joint 7, but at the opposed side there is an identical upper connection joint 7.

When the push-button 9 is pressed, the cable 10 are tightened and the pins 11 leave from the respective housings 12, permitting to change the position of the handlebar 1. When the handlebar 1 is placed in the folding position the backrest 2 is folded, as will be described hereinafter.

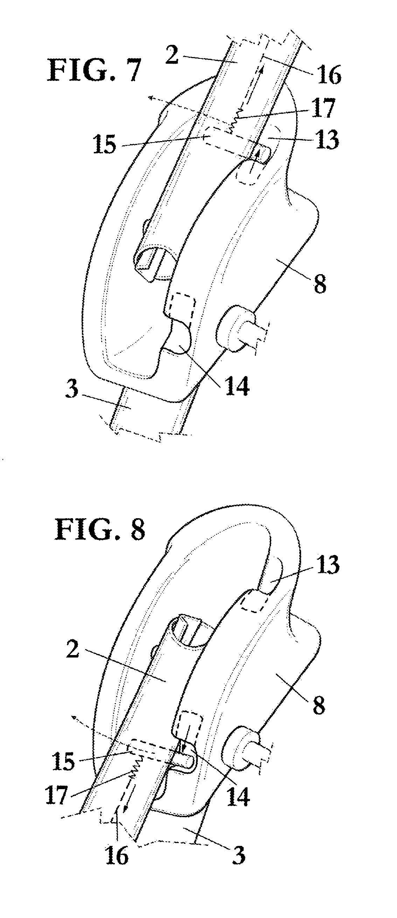

In Figs. 7 and 8 is shown a central connection joint 8, even though it must be pointed out that there is another central connection joint 8 placed in the opposed side of the pushchair of the present invention.

This central connection joint 8 comprises a pair of housings 13, 14 inside which a pin 15 provided at the ends of a driving cable 16 is housed.

Even though for simplicity reason it is not shown in the previous figures, this driving cable 16 extends through the handlebar 1 from the lower end of one of the bars forming the backrest 2 to the lower end of the other bar forming the backrest 2.

In Fig. 7 the bar of the backrest 2 is shown in its use position, in which the pin 15 is housed inside the first housing 13. In this position the pin 15 cannot be removed from the housing 13, because an elastic element 17, e.g. a helical spring, makes the pin 15 to be housed inside it. In this position the cable is relaxed.

When the handlebar 1 is in the previously described folded position and shown in Fig. 2, said cable 16 tights and makes the pin 15 to be removed from the housing 13 against the action of said elastic element 17 and, therefore, it is possible to fold the backrest 2.

When the backrest 2 is completely folded, as is shown in Fig. 8, the pin 15 is housed in an additional housing 14 provided in position opposed to said first housing 13. Also in this position the elastic element 17 makes the pin to remain housed inside said housing 14.

If it is desired to fold the pushchair of the present invention from the folded position, the cable 16 must be tightened by the handlebar 1 to permit the removal of the pin 15 from said additional housing 14 and to make an opposed movement to that described previously.

The pushchair of the present invention also comprises a brake for the rear wheels 6, that is driven by a pedal 19 and to release said brake an opposed pedal 20 must be driven. These two pedals 19, 20 are placed on an axis 21 in opposed positions, i.e. one of the pedals makes said axis 21 to rotate in a sense and the other one makes the axis to rotate in the opposed sense.

Even though reference is made to a specific embodiment of the invention, it is apparent for a person skilled in the art that the disclosed infant pushchair is susceptible of numerous variations and modifications, and that all the details can be substituted by other technically equivalent ones, without departing from the scope of protection defined by the attached claims.

## Claims

1. Infant pushchair comprising a frame defining a handlebar (1), a backrest (2), frontal legs (3) provided with wheels (4) and rear legs (5) also provided with wheels (6), said handlebar (1) being hinged with respect to said backrest (2), and the pushchair comprising means for folding it, folding means being driven by said handlebar (1), when the handlebar is placed in a folded position **characterised in that** said rear legs (5) are movable between a use position and a folded position, in which the rear wheels (6) are aligned with the frontal wheels (4).

2. Infant pushchair according to claim 1, **characterised in that** said folding means comprises a driving cable (16) linked to said handlebar (1) and to a pin (15) provided at the lower part of said backrest (2), so that in the use position of the handlebar (1) said driving cable (16) is relaxed and in the folded position of the handlebar (1) said cable (16) is tightened and makes said pin (15) to be removed from a housing (13) provided at a central connection joint (8) between said backrest (2) and one of said frontal legs (3).

3. Infant pushchair according to claim 2, **characterised in that** said central connection joint (8) comprises an additional housing (14) for said pin (15), inside which it is housed when the backrest (2) is in its folded position.

4. Infant pushchair according to claim 2 or 3, **characterised in that** said driving cable (16) comprises two pins (15), one at each of its ends, which are housed inside the housings (13, 14) of two central connection joints (8) placed at both sides of the backrest (2).

5. Infant pushchair according to claim 2 or 3, **characterised in that** said pin (15) comprises an associated elastic element (17) that pushes it to prevent its removal from the housing (13, 14) where it is housed.

6. Infant pushchair according to claim 1, **characterised in that** the folding movement of said rear legs (5) is driven by a movable plate (22) provided in a rotatable seat of the pushchair.

## Patentansprüche

1. Kinderschubwagen, der einen Rahmen aufweist, der einen Handgriff (1) definiert, weiter eine Rücklehne (2), vordere Schenkel (3), die mit Rädern (4) versehen sind, und hintere Schenkel (5), die auch mit Rädern (6) versehen sind, wobei der Handgriff (1) schanierartig bezüglich der Rücklehne (2) aufgehängt ist, und wobei der Schubwagen Mittel zum Falten aufweist, wobei die Faltmittel durch den Handgriff (1) angetrieben werden, wenn der Handgriff (1) in deiner gefalteten Position angeordnet ist,
**dadurch gekennzeichnet, dass** die hinteren Schenkel (5) zwischen einer Verwendungsposition und einer eingefalteten Position bewegbar sind, in welcher die hinteren Räder (6) mit den vorderen Rädern (4) ausgerichtet sind.

2. Kinderschubwagen nach Anspruch 1, **dadurch gekennzeichnet, dass** die Faltmittel ein Antriebskabel (16) aufweisen, welches mit dem Handgriff (1) und mit einem Stift (15) verbunden ist, der am unteren Teil der Rücklehne (2) vorgesehen ist, so dass das Antriebskabel (16) in der Anwendungsposition des Handgriffs (1) entspannt ist und dass das Kabel (16) in der eingefalteten Position des Handgriffs (1) angezogen ist und bewirkt, dass der Stift (15) aus einem Gehäuse (13) herausgezogen ist, welches an einem mittleren Verbindungsgelenk (8) zwischen der Rücklehne (2) und einem der vorderen Schenkel (3) vorgesehen ist.

3. Kinderschubwagen nach Anspruch 2, **dadurch gekennzeichnet, dass** das mittlere Verbindungsgelenk (8) ein zusätzliches Gehäuse (14) für den Stift (15) aufweist, innerhalb dem dieser aufgenommen ist, wenn die Rücklehne (2) in ihrer eingefalteten Position ist.

4. Kinderschubwagen nach Anspruch 2 oder 3, **dadurch gekennzeichnet, dass** das Antriebskabel (16) zwei Stifte (15) aufweist, und zwar jeweils einen an seinen Enden, die innerhalb der Gehäuse (13), (14) von zwei mittleren Verbindungsgelenken (8) aufgenommen sind, die auf beiden Seiten der Rücklehne (2) angeordnet sind.

5. Kinderschubwagen nach Anspruch 2 oder 3, **dadurch gekennzeichnet, dass** der Stift (15) ein assoziiertes elastisches Element (17) aufweist, welches auf ihn drückt, um zu verhindern, dass er aus dem Gehäuse (13) entfernt wird, in dem er aufgenommen ist.

6. Kinderschubwagen nach Anspruch 1, **dadurch gekennzeichnet, dass** die Faltbewegung der hinteren Schenkel (5) durch eine bewegbare Platte (22) angetrieben wird, die in einem drehbaren Sitz des Schubwagens vorgesehen ist.

## Revendications

1. Poussette pour bébé comportant un châssis avec une poignée (1), un appui arrière (2), les branches avant (3) équipées de roues (4) et des branches arrière (5) également équipées de roues (6), la poignée (1) étant articulée à l'appui arrière (2), la poussette comportant un moyen pour la plier, ce moyen étant commandé par la poignée (1) lorsqu'on met la poignée en position pliée,
**caractérisée en ce que**
les branches arrière (5) sont mobiles entre une position d'utilisation et une position pliée dans laquelle les roues arrière (6) sont alignées sur les roues avant (4).

2. Poussette pour bébé selon la revendication 1,
**caractérisée en ce que**
le moyen de pliage comporte un câble (16) relié à la poignée (1) et à une broche (15) dans la partie inférieure de l'appui arrière (2) pour qu'en position d'utilisation de la poignée (1), le câble (16) soit libéré et qu'en position pliée de la poignée (1) le câble (16) soit tendu et dégage la broche (15) du boîtier (13) de la pièce de connexion centrale (8) entre l'appui arrière (2) et l'une des branches avant (3).

3. Poussette pour selon la revendication 2,
**caractérisée en ce que**
la pièce de connexion centrale (8) comporte un boîtier supplémentaire (14) recevant la broche (15) lorsque l'appui arrière (2) est en position pliée.

4. Poussette pour selon la revendication 2 ou 3,
**caractérisée en ce que**
le câble d'entraînement (16) comporte deux broches (15), une à chaque extrémité, ces broches étant logées dans les boîtiers (13, 14) des pièces de connexion centrale (8) situées sur les deux côtés de l'appui arrière (2).

5. Poussette pour selon la revendication 2 ou 3,
**caractérisée en ce que**
la broche (15) comporte un élément élastique (17) associé qui la pousse pour éviter son extraction du boîtier (13, 14) qui la loge.

6. Poussette pour selon la revendication 1,
**caractérisée en ce que**
le mouvement de pliage des branches arrière (5) est entraîné par une plaque mobile (22) dans le siège pivotant de la poussette.
